# EUROPEAN PATENT SPECIFICATION

(11) **EP 3 502 595 B1**
(45) Date of publication and mention of the grant of the patent: **23.04.2025**
(21) Application number: 17208688.6
(22) Date of filing: 19.12.2017
(51) Int. Cl.: F25D 13/06, F25D 3/11

(54) **APPARATUS AND METHOD FOR COOLING PRODUCTS**
VORRICHTUNG UND VERFAHREN ZUR KÜHLUNG VON PRODUKTEN
APPAREIL ET PROCÉDÉ DE REFROIDISSEMENT DE PRODUITS

(43) Date of publication of application: 26.06.2019
(73) Proprietor: Air Liquide Deutschland GmbH, 40235 Düsseldorf (DE); L'Air Liquide, Société Anonyme pour l'Etude et l'Exploitation des Procédés Georges Claude, 75007 Paris (FR)
(72) Inventor: Voss, Robert, 47829 Krefeld (DE); Angenheister de Freitas, Alexander, 41460 Neuss (DE)
(74) Representative: Keenway Patentanwälte Neumann Heine Taruttis

(56) References cited:
- JP-A- S63 259 366
- US-A1- 2004 099 005
- US-A1- 2008 163 640
- US-A1- 2018 058 744

## Description

The present invention is directed to an apparatus and a method for cooling products, in particular food products.

Cooling apparatuses and cooling methods are known for various goods, in particular for food products. Thereby, the goods are usually treated by a cooling gas such as nitrogen. The temperature of the goods can be reduced due to the low temperature the cooling gas usually has. This way, in particular perishable food products can be frozen for storage and/or delivery to final customers.

The energy efficiency and cooling rates that can be achieved with known apparatuses and methods for cooling products are insufficiently low for some applications.

Cooling devices are known, for example, from US 2008/163640 A1, JP S63 259366 A and US 2004/099005 A1.

It is, therefore, an object of the present invention to overcome at least in part the disadvantages known from prior art and in particular to provide an apparatus and a method for cooling products in a particularly energy efficient and fast way.

These objects are solved by the features of the independent claims. Dependent claims are directed to preferred embodiments of the present invention.

The present invention discloses an apparatus for cooling products according to claim 1 that comprises at least:
- a cooling chamber with a conveyor for conveying the products through the cooling chamber,
- at least one circulator for circulating a cooling gas within at least a part of the cooling chamber,
- a first aperture element with a plurality of first aperture openings,
wherein the conveyor and the at least one circulator are arranged within the cooling chamber such that the cooling gas can impinge a first side of the conveyor, wherein the first aperture element is arranged within the cooling chamber such that the cooling gas penetrates through the first aperture openings before impinging the first side of the conveyor.

The first side of the conveyor is opposite the second side of the conveyor. The conveyor and the whole apparatus are preferably designed to convey the products to be cooled through the cooling chamber on the first side of the conveyor. The described apparatus is preferably designed to cool food products such as meat patties or hot breaded food products like Schnitzel. In particular, the products can be frozen by the described cooling apparatus. Thereby, food products can be prepared for storage and/or delivery to final customers. However, not only food products but also any other goods can be cooled with the described apparatus.

The products can be cooled within the cooling chamber. The cooling chamber is preferably a space that is thermally isolated from the environment. The cooling chamber is preferably confined by respective boundaries such as housing walls and preferably doors, locks and/or barriers through which the conveyor enters and leaves the cooling chamber.

The products can be conveyed through the cooling chamber by the conveyor. The conveyor comprises preferably a conveyor belt, onto which the products can be placed. The conveyor belt can be held and moved by two or more rolls. That is, the conveyor can have a first run and a second run, which can be moved concurrently. Thereby, the products can be placed in particular on the first run. The products can be placed onto the conveyor outside or inside the cooling chamber. Also, the products can be taken from the conveyor outside or inside the cooling chamber. Air locks can be provided, via which the products can be moved into and out of the cooling chamber. The cooling chamber is preferably designed as a tunnel through which the conveyor can convey the products. The apparatus hence can also be referred to as a cooling tunnel.

Inside the cooling chamber the products can be cooled. Therefore, the cooling gas is introduced into the cooling chamber. The cooling gas is preferably a gas such as nitrogen or carbon dioxide. The cooling chamber comprises preferably at least one cooling gas inlet, through which the cooling gas or at least a gas such as nitrogen or carbon dioxide can be introduced into the cooling chamber. Nitrogen or carbon dioxide can be provided to the cooling gas inlet, for example, from a storage tank and/or from a network for supplying the cooling gas. Nitrogen or carbon dioxide thereby can be provided in the gaseous and/or in the liquid state. If the gas is provided at least in part in its liquid state, the gas can evaporate within the cooling chamber. The cooling gas is preferably provided at a low temperature such as -150 °C to -40°C such that the products can be cooled by the cooling gas.

Preferably the cooling gas is introduced into the cooling chamber in such a way that the cooling gas impinges the products. This can be achieved in particular by a respective design and arrangement of the cooling gas inlet. Further, the cooling gas that is already within the cooling chamber is circulated through the cooling chamber. Thereby, the cooling gas can impinge products more than once. This can increase energy efficiency. The cooling gas can be circulated by the at least one circulator. The at least one circulator preferably comprises a fan. With the at least one circulator a flow of the cooling gas can be generated within the cooling chamber. With the at least one circulator the cooling gas can be preferably circulated at least within that part of the cooling chamber in which the conveyor is located.

The apparatus according to the present invention allows to cool products highly energy efficiently, in particular due to the first aperture element.

The first aperture element is designed such that the cooling gas can impinge the first side of the conveyor after having penetrated through the first aperture openings. Due to the first aperture element with the first aperture openings the flow of the cooling gas can be directed onto those parts of the conveyor, where products are actually placed. That is, the flow of the cooling gas can be restricted locally by the first aperture element with the first aperture openings. This can reduce the amount of cooling gas required as there is less cooling gas that impinges parts of the conveyor where no products are placed. Those parts of the conveyor do not have to be cooled. By reducing the consumption of cooling gas the energy efficiency of the cooling can be increased.

With the first aperture openings a nozzle effect can be achieved. That is, the cooling gas can be directed onto the products with an increased flow rate. Thereby, a particularly fast cooling of the products can be achieved. This corresponds to a particularly high cooling rate.

In a preferred embodiment of the apparatus the conveyor comprises a plurality of perforation openings.

The perforation openings are preferably openings within the conveyor (belt) extending through the conveyor (belt). Through the perforation openings the cooling gas can penetrate through the conveyor from the first side of the conveyor to the second side of the conveyor. The smaller the density of the perforation openings is (that is the fewer perforation openings are provided and/or the smaller the perforation openings are per area of the conveyor), the smaller is a second pressure on the second side of the conveyor compared to a first pressure on the first side of the conveyor.

In a further preferred embodiment of the apparatus the conveyor is designed such that a pressure gradient between the first side of the conveyor and the second side of the conveyor is generated when the first side of the conveyor is impinged with the cooling gas.

If the cooling gas impinges the first side of the conveyor the flow of the cooling gas is slowed down by the conveyor. Thus, the pressure of the cooling gas at the second side of the conveyor is lower than on the first side of the conveyor. Between the first side of the conveyor and the second side of the conveyor a pressure gradient is generated.

In a further preferred embodiment of the apparatus the first pressure is between 10 Pa (Pascal) and 300 Pa larger than the second pressure.

In a further preferred embodiment the apparatus is designed such that the products can be received at the first side of the conveyor.

This means that preferably the products are in use conveyed on the first side of the conveyor. If the products are placed onto the first side of the conveyor, the products can be impinged by the cooling gas as the first side of the conveyor is impinged with the cooling gas. Preferably, the conveyor is oriented in such a way that the first side is an upper side. The cooling gas then can impinge the first side of the conveyor from a top of the cooling chamber (from above), thereby pressing the products down onto the conveyor. In this case the first aperture element is preferably arranged above the first side of the conveyor and the second aperture element is preferably arranged below the second side of the conveyor.

In a further preferred embodiment of the apparatus the first aperture openings are slits oriented along a conveying direction of the conveyor.

The conveying direction is the direction into which the products can be conveyed by the conveyor i.e. the direction of movement of the conveyor in use. As the products are conveyed in this direction, the cooling gas can impinge the products through the slits. That is, the first aperture openings have a shape that is adapted to the path the products take when being conveyed through the cooling chamber. The slits extend preferably along the whole first aperture element, that is preferably along the whole cooling chamber. Alternatively, it is preferred that there are multiple shorter slits provided along the conveying direction. With several smaller slits the stability of the first aperture element may be increased compared to an embodiment with only one large slit.

Perpendicular to the conveying direction there are preferably multiple slits provided as the first aperture openings. Preferably, these slits are oriented parallel to each other.

In a further preferred embodiment of the apparatus the first aperture openings are circular, wherein a plurality of the first aperture openings is arranged in at least one line along the conveying direction.

With many circular first aperture openings arranged on lines along the conveying direction the same effect as with one or several slits along the conveying direction can be achieved.

A second aperture element with a plurality of second aperture openings is provided such that the cooling gas penetrates through the second aperture openings after having passed through the conveyor.

The second aperture element is preferably designed such that the cooling gas can flow away from the second side of the conveyor only by penetrating through the second aperture openings. Due to the second aperture element with the second aperture openings the flow of the cooling gas towards the first side of the conveyor and through the conveyor can be influenced. This can enhance the local restriction of the flow of the cooling gas caused by the first aperture element. Thereby, the consumption of cooling gas can be reduced even more and the energy efficiency of the cooling can be increased further.

In a further preferred embodiment of the apparatus the second aperture openings are slits oriented along a conveying direction of the conveyor.

The second aperture openings preferably have a shape that is adapted to the path the products take when being conveyed through the cooling chamber. The slits extend preferably along the whole second aperture element, that is preferably along the whole cooling chamber. Alternatively, it is preferred that there are multiple shorter slits provided along the conveying direction. This may increase stability of the second aperture element.

Perpendicular to the conveying direction there are preferably multiple slits provided as the second aperture openings. Preferably, these slits are oriented parallel to each other.

In a further preferred embodiment of the apparatus the second aperture openings are circular, wherein a plurality of the second aperture openings is arranged in at least one line along the conveying direction.

With many circular second aperture openings arranged on lines along the conveying direction the same effect as with one or several slits along the conveying direction can be achieved.

In a further preferred embodiment of the apparatus the first aperture element and the second aperture element are designed and arranged such that each of the first aperture openings is aligned with a corresponding of the second aperture openings.

It is preferred that the first aperture openings and the second aperture openings are designed and arranged in the same way. That is, the cooling gas that has penetrated through a particular first aperture opening can penetrate through the conveyor and subsequently through a second aperture opening that has the same shape as the first aperture opening and that is situated at the same position as seen from a direction perpendicular to a conveyor surface. In particular, the first aperture element and the second aperture element can have the same shape. For example, the first aperture element and the second aperture element can be plates that are arranged parallel to each other and spaced apart in the direction perpendicular to the conveyor surface.

With the first aperture openings and the second aperture openings being adapted to each other as described, a well-defined flow of the cooling gas around the products can be generated.

In a further preferred embodiment the apparatus further comprises guiding elements for guiding a flow of the cooling gas, wherein the guiding elements are arranged within the cooling chamber such that an impingement section is formed adjacent to a first side of the conveyor, in which the cooling gas can impinge the first side of the conveyor having a first pressure, wherein the first aperture element is arranged within the impingement section, wherein the conveyor is designed such that the cooling gas can penetrate through the conveyor so as to have a second pressure at a second side of the conveyor, wherein the second pressure is lower than the first pressure, and wherein the guiding elements are arranged such as to form at least one backflow channel from the second side of the conveyor to the at least one circulator, and wherein the cooling gas can be directed into the impingement section via the at least one circulator.

The guiding elements are preferably designed in such a way that the cooling gas cannot penetrate through the guiding elements. Alternatively, the guiding elements are preferably designed such that only a small fraction of the cooling gas that impinges a guiding element can penetrate through the guiding element. Thus, the flow of the cooling gas can be guided by the guiding elements.

The impingement section is a part of the cooling chamber that is confined at least in part by the guiding elements. Further, the impingement section is preferably partly confined by the first side of the conveyor. The impingement section thus is that part of the cooling chamber, via which the cooling gas can impinge the products. The pressure of the cooling gas within the impingement section and in particular adjacent to the first side of the conveyor, that is the first pressure, can influence the cooling of the products. The impingement section is not necessarily confined to all sides.

The first aperture element is situated within the impingement section. The first pressure thus is the pressure between the first aperture element and the first side of the conveyor.

After having impinged the first side of the conveyor, the cooling gas can penetrate through the conveyor to the second side of the conveyor. In case the conveyor comprises a first run and a second run, the first side of the conveyor is a first side of the first run and the second side of the conveyor is a second side of the first run. That is, the second side of the conveyor faces a space between the first run and the second run. The cooling gas can penetrate from the first side of the conveyor through the first run of the conveyor to the second side and thus enter the space between the first and second runs. In this case the first aperture element is arranged adjacent to the first run of the conveyor, preferably above the first run of the conveyor, and the second aperture element is arranged between the first and second runs of the conveyor.

The fact that the second pressure is lower than the first pressure means in particular that the conveyor constitutes a flow resistance. That is, by penetrating through the conveyor the flow of the cooling gas is slowed down.

Once the cooling gas has penetrated through the conveyor the cooling gas is guided to the at least one backflow channel. Through the at least one backflow channel the cooling gas can flow back to the at least one circulator. With the at least one circulator the cooling gas can be introduced into the impingement section and can impinge the conveyor again. Thus, a circular flow path for the cooling gas is provided.

The at least one backflow channel is preferably situated outside the impingement section. At least a part of the guiding elements preferably separate the impingement section from the at least one backflow channel.

In a further preferred embodiment of the apparatus the guiding elements are arranged such that the cooling gas can flow concurrently through the impingement section and the at least one backflow channel.

Preferably, the cooling gas can be introduced into a top of the impingement section via the at least one circulator, can flow down to the first side of the conveyor, can penetrate through the conveyor to the second side of the conveyor and can flow up to the at least one circulator through the backflow channel. This can allow a particularly space-saving construction of the described apparatus.

In a further preferred embodiment of the apparatus at least two circulators are provided and wherein at least one of the guiding elements is arranged between the circulators.

With two circulators the flow of the cooling gas can be more uniformly than with only one circulator. The guiding elements are preferably arranged such that the cooling gas can be introduced into the impingement section only via the at least two circulators. Thus, at least one of the guiding elements is preferably arranged between the at least two circulators. This way, the cooling gas cannot enter the impingement section via a space in between the at least two circulators. It is possible that a small space is left between the circulators and the guiding elements. This may facilitate the construction. The guiding elements and the at least two circulators are preferably arranged in such a way that no cooling gas or only a little of the cooling gas can flow into the impingement section without flowing through one of the circulators.

In a further preferred embodiment of the apparatus the at least one backflow channel is formed between at least one respective guiding element and a boundary of the cooling chamber.

The backflow channel can be formed between the impingement section, which is confined by guiding elements, and the boundaries of the cooling chamber. This can allow a particularly space-saving construction of the described apparatus.

In a further preferred embodiment of the apparatus the impingement section has a rectangular cross section perpendicular to a conveying direction of the conveyor.

As seen in the conveying direction, the impingement section has a rectangular cross section. That means in particular that a cross section through which the flow of the cooling gas is guided from the at least one circulator to the first side of the conveyor is constant. Thus, a particularly uniform flow of the cooling gas can be generated. In particular in this embodiment the at least one circulator is preferably arranged at that side of the impingement section that is opposite to the first side of the conveyor.

According to a further aspect of the present invention a method according to claim 12 for cooling products is provided that comprises at least the following steps:
a) conveying the products through a cooling chamber with a conveyor, and
b) generating a flow of a cooling gas within the cooling chamber, wherein the flow is generated in such a way that the cooling gas impinges a first side of the conveyor after having penetrated through first aperture openings of a first aperture element.

The details and advantages disclosed for the apparatus according to the present invention can be applied to the method of the invention, and vice versa. In particular it is preferred that the described method is performed using the described apparatus.

In a preferred embodiment of the method the products are placed onto the conveyor in such a way that each of the products is assigned at least one respective of the first aperture openings.

Preferably the first and also the second aperture openings are arranged such that a well-defined flow of the cooling gas can be generated around the products. That is, the aperture openings define positions on the conveyor in a direction perpendicular to the conveyor, where the products are preferably placed. The fact that to each of the products at least one respective of the first aperture openings is assigned means that each product is placed in one of these positions. The at least one respective first aperture opening can be in particular one or more slits along the path on which the product is conveyed through the cooling chamber. If the products are placed onto the conveyor in the described way, a particularly energy efficient cooling can be achieved.

It is preferred that the products are placed onto the conveyor in such a way that each of the products is assigned at least one respective of the first aperture openings and at least one respective of the second aperture openings.

In a further preferred embodiment of the method the cooling gas that penetrates through the at least one first aperture opening assigned to a respective product impinges the product centrally.

In a preferred embodiment of the method the flow of the cooling gas is guided by at least one guiding element.

In a further preferred embodiment of the method the at least one backflow channel is confined at least by at least one respective guiding element and a boundary of the cooling chamber.

In a further preferred embodiment of the method the cooling gas impinges the first side of the conveyor concurrently to a flow of the cooling gas through the at least one backflow channel.

In particular if the cooling gas is restricted locally such that the product is not impinged completely but only locally, it is advantageous that the cooling gas impinges the product centrally. That way the cooling gas can spread across the surface of the product and can cool all parts of the product. The fact that the product is impinged centrally refers to a direction perpendicular to the conveying direction within a plane of the conveyor.

The specification, in particular in connection with the figures, explains the invention further and specifies particularly preferred embodiments of the invention. Particularly preferred variants of the invention and also the technical field will now be explained in more detail on the basis of the enclosed figures. It should be noted that the exemplary embodiment shown in the figures are not intended to restrict the invention. The figures are schematic and may not be to scale. The figures displays:
- Fig. 1:: a cross sectional view of a first embodiment of an apparatus for cooling products, and
- Fig. 2:: a cross sectional view of a second embodiment of an apparatus for cooling products.

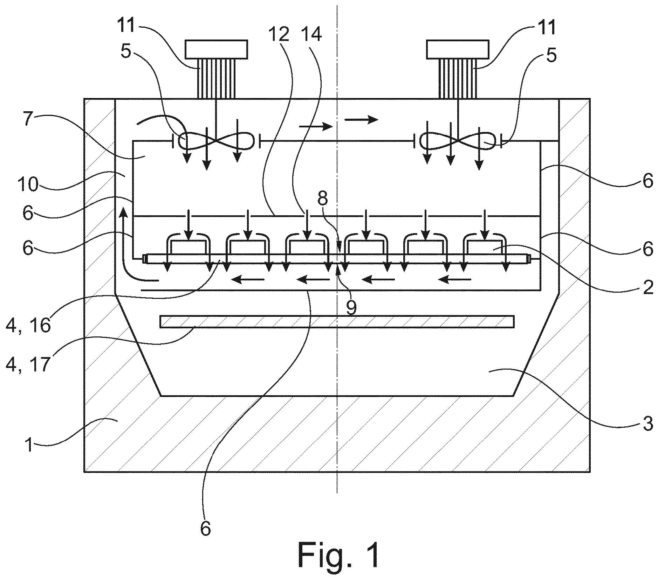

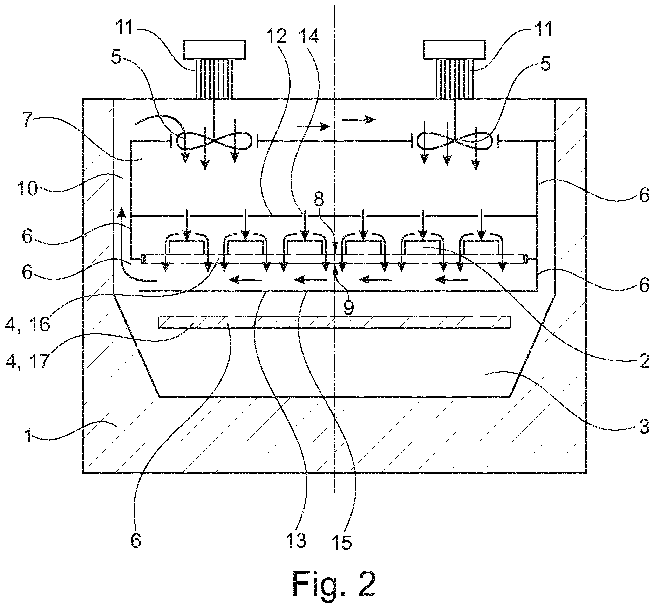

Fig. 1 shows an embodiment being useful for understanding the invention, which is outside the subject-matter of the claims. Figure 2 shows an embodiment according to the present invention, which discloses an apparatus for cooling products according to claim 1.

Fig. 1 shows a first embodiment of an apparatus 1 for cooling products 2 that comprises a cooling chamber 3 with a conveyor 4 for conveying the products 2 through the cooling chamber 3. The conveyor has a first run 16 and a second run 17. The products 2 can be received at a first side 8 of the conveyor. The conveyor 4 comprises a plurality of perforation openings and is designed such that a pressure gradient between the first side 8 of the conveyor 4 and a second side 9 of the conveyor 4 is generated when the first side 8 of the conveyor 4 is impinged with a cooling gas.

The conveyor 4 is designed such that the cooling gas can penetrate through the conveyor 4 so as to have a second pressure at the second side 9 of the conveyor 4. The second pressure is lower than the first pressure. In this example, the first side 8 of the conveyor 4 is an upper side and the second side 9 of the conveyor 4 is a lower side. Also, the apparatus 1 comprises two circulators 5 for circulating the cooling gas within the cooling chamber 3. Each circulator 5 has a motor 11. Further, the apparatus 1 comprises a first aperture element 12 with a plurality of first aperture openings 14. The conveyor 4 and the circulators 5 are arranged within the cooling chamber 3 such that the cooling gas can impinge a first side 8 of the conveyor 4. The first aperture element 12 is arranged within the cooling chamber 3 such that the cooling gas penetrates through the first aperture openings 14 before impinging the first side 8 of the conveyor 4. The first aperture openings 14 are slits oriented along a conveying direction of the conveyor 4. The conveying direction of the conveyor 4 is oriented perpendicular to the drawing plane of Fig. 1.

The apparatus 1 further comprises guiding elements 6 for guiding a flow of the cooling gas, wherein the guiding elements 6 are arranged within the cooling chamber 3 such that an impingement section 7 is formed adjacent to the first side 8 of the conveyor 4, in which the cooling gas can impinge the first side 8 of the conveyor 4 having a first pressure. The impingement section 7 has a rectangular cross section in a plane perpendicular to the conveying direction of the conveyor 4. The first aperture element 12 is arranged within the impingement section 7. The conveyor 4 is designed such that the cooling gas can penetrate through the conveyor 4 so as to have a second pressure at a second side 9 of the conveyor 4, wherein the second pressure is lower than the first pressure, and wherein the guiding elements 6 are arranged to form a backflow channel 10 from the second side 9 of the conveyor 4 to the circulators 5. The cooling gas can be directed into the impingement section 7 via the circulators 5. The guiding elements 6 are arranged such that the cooling gas can flow concurrently through the impingement section 7 and the backflow channel 10. The backflow channel 10 is confined by guiding elements 6 and a boundary of the cooling chamber 3. One of the guiding elements 6 is arranged between the circulators 5.

The products 2 can be placed onto the conveyor 4 in such a way that each of the products 2 is assigned at least one respective of the first aperture openings 14. In Fig. 1 the first aperture opening 14 assigned to a product 2 is located above below the product 2. The cooling gas that penetrates through the at least one first aperture opening 14 assigned to a respective product 2 impinges the product 2 centrally.

In the cross section view of Fig. 1 two circulators 5 can be seen. Further circulators 5 can be provided at other positions in the conveying direction. Respective further guiding elements 6 may also be provided.

Fig. 2 shows a second embodiment of an apparatus 1 for cooling products 2. Unless described otherwise in the following, the second embodiment is equivalent to the first embodiment. Compared to the first embodiment, the second embodiment further comprises a second aperture element 13 with a plurality of second aperture openings 15. The second aperture element 13 is provided such that the cooling gas penetrates through the second aperture openings 15 after having passed through the conveyor 4. The second aperture openings 15 are slits oriented along a conveying direction of the conveyor 4. The first aperture element 12 and the second aperture element 13 are designed and arranged such that each of the first aperture openings 14 is aligned with a corresponding of the second aperture openings 15.

With the apparatus 1 products 2 such as food products can be cooled using a cooling gas such as a gas comprising nitrogen. With aperture elements 12, 13 a flow of the cooling gas is guided. Thereby, the products 2 can be cooled particularly energy efficiently and at a particularly high cooling rate.

### List of reference numerals

- 1: apparatus
- 2: product
- 3: cooling chamber
- 4: conveyor
- 5: circulator
- 6: guiding element
- 7: impingement section
- 8: first side
- 9: second side
- 10: backflow channel
- 11: motor
- 12: first aperture element
- 13: second aperture element
- 14: first aperture opening
- 15: second aperture opening
- 16: first run
- 17: second run

## Claims

1. Apparatus (1) for cooling products (2) comprising at least:
- a cooling chamber (3) with a conveyor (4) for conveying the products (2) through the cooling chamber (3),
- at least one circulator (5) for circulating a cooling gas within at least a part of the cooling chamber (3),
- a first aperture element (12) with a plurality of first aperture openings (14), wherein the conveyor (4) and the at least one circulator (5) are arranged within the cooling chamber (3) such that the cooling gas can impinge a first side (8) of the conveyor (4), **characterized in that** the first aperture element (12) is arranged within the cooling chamber (3) such that the cooling gas penetrates through the first aperture openings (14) before impinging the first side (8) of the conveyor (4), wherein a second aperture element (13) with a plurality of second aperture openings (15) is provided such that the cooling gas penetrates through the second aperture openings (15) after having passed through the conveyor (4).

2. Apparatus (1) according to claim 1, wherein the conveyor (4) is designed such that a pressure gradient between the first side (8) of the conveyor (4) and the second side (9) of the conveyor (4) is generated when the first side (8) of the conveyor (4) is impinged with the cooling gas.

3. Apparatus (1) according to any of the preceding claims, wherein the apparatus (1) is designed such that the products (2) can be received at the first side (8) of the conveyor (4).

4. Apparatus (1) according to any of the preceding claims, wherein the first aperture openings (14) are slits oriented along a conveying direction of the conveyor (4).

5. Apparatus (1) according to any of the preceding claims, wherein the second aperture openings (15) are slits oriented along a conveying direction of the conveyor (4).

6. Apparatus (1) according to any of the preceding claims, wherein the first aperture element (12) and the second aperture element (13) are designed and arranged such that each of the first aperture openings (14) is aligned with a corresponding one of the second aperture openings (15).

7. Apparatus (1) according to any of the preceding claims, wherein the apparatus (1) further comprises guiding elements (6) for guiding a flow of the cooling gas, wherein the guiding elements (6) are arranged within the cooling chamber (3) such that an impingement section (7) is formed adjacent to a first side (8) of the conveyor (4), in which the cooling gas can impinge the first side (8) of the conveyor (4) having a first pressure, wherein the first aperture element (12) is arranged within the impingement section (7), wherein the conveyor (4) is designed such that the cooling gas can penetrate through the conveyor (4) so as to have a second pressure at a second side (9) of the conveyor (4), wherein the second pressure is lower than the first pressure, and wherein the guiding elements (6) are arranged such as to form at least one backflow channel (10) from the second side (9) of the conveyor (4) to the at least one circulator (5), and wherein the cooling gas can be directed into the impingement section (7) via the at least one circulator (5).

8. Apparatus (1) according to claim 7, wherein the guiding elements (6) are arranged such that the cooling gas can flow concurrently through the impingement section (7) and the at least one backflow channel (10).

9. Apparatus (1) according to claim 7 or 8, wherein at least two circulators (5) are provided and wherein at least one of the guiding elements (6) is arranged between the circulators (5).

10. Apparatus (1) according to any of claims 7 to 9, wherein the at least one backflow channel (10) is formed between at least one respective guiding element (6) and a boundary of the cooling chamber (3).

11. Apparatus (1) according to any of the preceding claims, wherein the impingement section (7) has a rectangular cross section perpendicular to a conveying direction of the conveyor (4).

12. Method for cooling products comprising at least the following steps:
a) conveying the products (2) through a cooling chamber (3) with a conveyor (4), and
b) generating a flow of a cooling gas within the cooling chamber (3), wherein the flow is generated in such a way that the cooling gas impinges a first side (8) of the conveyor (4) after having penetrated through first aperture openings (14) of a first aperture element (12) and that the cooling gas penetrates through second aperture openings (15) of a second aperture element (13) after having passed through the conveyor (4).

13. Method according to claim 12, wherein the products (2) are placed onto the conveyor (4) in such a way that each of the products (2) is assigned at least one respective of the first aperture openings (14).

14. Method according to claim 13, wherein the cooling gas that penetrates through the at least one first aperture opening (14) assigned to a respective product (2) impinges the product (2) centrally.

## Patentansprüche

1. Einrichtung (1) zum Kühlen von Produkten (2), die mindestens Folgendes umfasst:
- eine Kühlkammer (3) mit einem Förderer (4) zum Fördern der Produkte (2) durch die Kühlkammer (3),
- mindestens eine Umwälzvorrichtung (5) zum Umwälzen eines Kühlgases innerhalb zumindest eines Teils der Kühlkammer (3),
- ein erstes Blendenelement (12) mit mehreren ersten Blendenöffnungen (14), wobei der Förderer (4) und die mindestens eine Umwälzvorrichtung (5) innerhalb der Kühlkammer (3) derart angeordnet sind, dass das Kühlgas auf eine erste Seite (8) des Förderers (4) aufprallen kann, **dadurch gekennzeichnet, dass** das erste Blendenelement (12) innerhalb der Kühlkammer (3) derart angeordnet ist, dass das Kühlgas durch die ersten Blendenöffnungen (14) dringt, bevor es auf die erste Seite (8) des Förderers (4) aufprallt, wobei ein zweites Blendenelement (13) mit mehreren zweiten Blendenöffnungen (15) derart bereitgestellt ist, dass das Kühlgas durch die zweiten Blendenöffnungen (15) dringt, nachdem es den Förderer (4) durchströmt hat.

2. Einrichtung (1) nach Anspruch 1, wobei der Förderer (4) derart ausgestaltet ist, dass ein Druckgradient zwischen der ersten Seite (8) des Förderers (4) und der zweiten Seite (9) des Förderers (4) erzeugt wird, wenn Kühlgas auf die erste Seite (8) des Förderers (4) aufprallt.

3. Einrichtung (1) nach einem der vorhergehenden Ansprüche, wobei die Einrichtung (1) derart ausgestaltet ist, dass die Produkte (2) an der ersten Seite (8) des Förderers (4) aufgenommen werden können.

4. Einrichtung (1) nach einem der vorhergehenden Ansprüche, wobei die ersten Blendenöffnungen (14) Schlitze sind, die entlang einer Förderrichtung des Förderers (4) ausgerichtet sind.

5. Einrichtung (1) nach einem der vorhergehenden Ansprüche, wobei die zweiten Blendenöffnungen (15) Schlitze sind, die entlang einer Förderrichtung des Förderers (4) ausgerichtet sind.

6. Einrichtung (1) nach einem der vorhergehenden Ansprüche, wobei das erste Blendenelement (12) und das zweite Blendenelement (13) derart ausgestaltet und angeordnet sind, dass jede der ersten Blendenöffnungen (14) mit einer entsprechenden der zweiten Blendenöffnungen (15) ausgerichtet ist.

7. Einrichtung (1) nach einem der vorhergehenden Ansprüche, wobei die Einrichtung (1) ferner Führungselemente (6) zum Führen einer Strömung des Kühlgases umfasst, wobei die Führungselemente (6) innerhalb der Kühlkammer (3) derart angeordnet sind, dass ein Aufprallabschnitt (7) angrenzend an eine erste Seite (8) des Förderers (4) ausgebildet wird, in dem das Kühlgas auf die erste Seite (8) des Förderers (4) aufprallen kann, die einen ersten Druck aufweist, wobei das erste Blendenelement (12) innerhalb des Aufprallabschnitts (7) angeordnet ist, wobei der Förderer (4) derart ausgestaltet ist, dass das Kühlgas durch den Förderer (4) dringen kann, so dass ein zweiter Druck an einer zweiten Seite (9) des Förderers (4) entsteht, wobei der zweite Druck niedriger als der erste Druck ist, und wobei die Führungselemente (6) derart angeordnet sind, dass sie mindestens einen Rückströmkanal (10) von der zweiten Seite (9) des Förderers (4) zu der mindestens einen Umwälzvorrichtung (5) ausbilden, und wobei das Kühlgas über die mindestens eine Umwälzvorrichtung (5) in den Aufprallabschnitt (7) geleitet werden kann.

8. Einrichtung (1) nach Anspruch 7, wobei die Führungselemente (6) derart angeordnet sind, dass das Kühlgas gleichzeitig durch den Aufprallabschnitt (7) und den mindestens einen Rückströmkanal (10) strömen kann.

9. Einrichtung (1) nach Anspruch 7 oder 8, wobei mindestens zwei Umwälzvorrichtungen (5) vorgesehen sind und wobei mindestens eines der Führungselemente (6) zwischen den Umwälzvorrichtungen (5) angeordnet ist.

10. Einrichtung (1) nach einem der Ansprüche 7 bis 9, wobei der mindestens eine Rückströmkanal (10) zwischen mindestens einem jeweiligen Führungselement (6) und einer Begrenzung der Kühlkammer (3) ausgebildet ist.

11. Einrichtung (1) nach einem der vorhergehenden Ansprüche, wobei der Aufprallabschnitt (7) einen rechteckigen Querschnitt senkrecht zu einer Förderrichtung des Förderers (4) aufweist.

12. Verfahren zum Kühlen von Produkten, das mindestens die folgenden Schritte umfasst:
a) Fördern der Produkte (2) durch eine Kühlkammer (3) mit einem Förderer (4), und
b) Erzeugen einer Kühlgasströmung innerhalb der Kühlkammer (3), wobei die Strömung derart erzeugt wird, dass das Kühlgas auf eine erste Seite (8) des Förderers (4) aufprallt, nachdem es durch erste Blendenöffnungen (14) eines ersten Blendenelements (12) gedrungen ist, und dass das Kühlgas durch zweite Blendenöffnungen (15) eines zweiten Blendenelements (13) dringt, nachdem es den Förderer (4) durchströmt hat.

13. Verfahren nach Anspruch 12, wobei die Produkte (2) derart auf dem Förderer (4) platziert werden, dass jedem der Produkte (2) jeweils mindestens eine der ersten Blendenöffnungen (14) zugeordnet wird.

14. Verfahren nach Anspruch 13, wobei das Kühlgas, das durch die mindestens eine erste Blendenöffnung (14) dringt, die einem jeweiligen Produkt (2) zugeordnet ist, mittig auf das Produkt (2) aufprallt.

## Revendications

1. Appareil (1) pour refroidir des produits (2), comprenant au moins :
- une chambre de refroidissement (3) avec un transporteur (4) pour transporter les produits (2) à travers la chambre de refroidissement (3),
- au moins un circulateur (5) pour faire circuler un gaz de refroidissement à l'intérieur d'au moins une partie de la chambre de refroidissement (3),
- un premier élément d'ouverture (12) avec une pluralité de premiers trous d'ouverture (14), dans lequel le transporteur (4) et l'au moins un circulateur (5) sont agencés à l'intérieur de la chambre de refroidissement (3) de manière telle que le gaz de refroidissement peut entrer en contact avec un premier côté (8) du transporteur (4), **caractérisé en ce que** le premier élément d'ouverture (12) est agencé à l'intérieur de la chambre de refroidissement (3) de manière telle que le gaz de refroidissement pénètre à travers les premiers trous d'ouverture (14) avant d'entrer en contact avec le premier côté (8) du transporteur (4), dans lequel un second élément d'ouverture (13) avec une pluralité de seconds trous d'ouverture (15) est prévu de manière telle que le gaz de refroidissement pénètre à travers les seconds trous d'ouverture (15) après être passé à travers le transporteur (4).

2. Appareil (1) selon la revendication 1, dans lequel le transporteur (4) est conçu de manière telle qu'un gradient de pression entre le premier côté (8) du transporteur (4) et le second côté (9) du transporteur (4) est généré lorsque le gaz de refroidissement entre en contact avec le premier côté (8) du transporteur (4).

3. Appareil (1) selon de quelconques des revendications précédentes, dans lequel l'appareil (1) est conçu de manière telle que les produits (2) peuvent être reçus sur le premier côté (8) du transporteur (4).

4. Appareil (1) selon de quelconques des revendications précédentes, dans lequel les premiers trous d'ouverture (14) sont des fentes orientées le long d'une direction de transport du transporteur (4).

5. Appareil (1) selon de quelconques des revendications précédentes, dans lequel les seconds trous d'ouverture (15) sont des fentes orientées le long d'une direction de transport du transporteur (4).

6. Appareil (1) selon de quelconques des revendications précédentes, dans lequel le premier élément d'ouverture (12) et le second élément d'ouverture (13) sont conçus et agencés de manière telle que chacun des premiers trous d'ouverture (14) est aligné avec un correspondant des seconds trous d'ouverture (15).

7. Appareil (1) selon de quelconques des revendications précédentes, dans lequel l'appareil (1) comprend en outre des éléments de guidage (6) pour guider un écoulement du gaz de refroidissement, dans lequel les éléments de guidage (6) sont agencés à l'intérieur de la chambre de refroidissement (3) de manière telle qu'une section d'entrée en contact (7) est formée de façon adjacente à un premier côté (8) du transporteur (4), dans lequel le gaz de refroidissement peut entrer en contact avec le premier côté (8) du transporteur (4) ayant une première pression, dans lequel le premier élément d'ouverture (12) est agencé à l'intérieur de la section d'entrée en contact (7), dans lequel le transporteur (4) est conçu de manière telle que le gaz de refroidissement peut pénétrer à travers le transporteur (4) afin d'avoir une seconde pression sur un second côté (9) du transporteur (4), dans lequel la seconde pression est plus basse que la première pression, et dans lequel les éléments de guidage (6) sont agencés de manière telle à former au moins un canal de retour d'écoulement (10) depuis le second côté (9) du transporteur (4) jusqu'à l'au moins un circulateur (5), et dans lequel le gaz de refroidissement peut être dirigé dans la section d'entrée en contact (7) par l'intermédiaire de l'au moins un circulateur (5).

8. Appareil (1) selon la revendication 7, dans lequel les éléments de guidage (6) sont agencés de manière telle que le gaz de refroidissement peut s'écouler simultanément à travers la section d'entrée en contact (7) et l'au moins un canal de retour d'écoulement (10).

9. Appareil (1) selon la revendication 7 ou 8, dans lequel au moins deux circulateurs (5) sont prévus et dans lequel au moins un des éléments de guidage (6) est agencé entre les circulateurs (5).

10. Appareil (1) selon de quelconques des revendications 7 à 9, dans lequel l'au moins un canal de retour d'écoulement (10) est formé entre au moins un élément de guidage respectif (6) et une limite de la chambre de refroidissement (3).

11. Appareil (1) selon de quelconques des revendications précédentes, dans lequel la section d'entrée en contact (7) a une section transversale rectangulaire perpendiculaire à une direction de transport du transporteur (4).

12. Procédé pour refroidir des produits, comprenant au moins les étapes suivantes :
a) le transport des produits (2) à travers une chambre de refroidissement (3) avec un transporteur (4), et
b) la génération d'un écoulement d'un gaz de refroidissement à l'intérieur de la chambre de refroidissement (3), dans lequel l'écoulement est généré de manière telle que le gaz de refroidissement entre en contact avec un premier côté (8) du transporteur (4) après avoir pénétré à travers des premiers trous d'ouverture (14) d'un premier élément d'ouverture (12) et que le gaz de refroidissement pénètre à travers des seconds trous d'ouverture (15) d'un second élément d'ouverture (13) après être passé à travers le transporteur (4).

13. Procédé selon la revendication 12, dans lequel les produits (2) sont placés sur le transporteur (4) de manière telle qu'au moins un respectif des premiers trous d'ouverture (14) est attribué à chacun des produits (2).

14. Procédé selon la revendication 13, dans lequel le gaz de refroidissement qui pénètre à travers l'au moins un premier trou d'ouverture (14) attribué à un produit respectif (2) entre en contact avec le produit (2) centralement.
